# EUROPEAN PATENT APPLICATION

(11) **EP 2 381 404 A1**
(43) Date of publication of application: **26.10.2011**
(21) Application number: 11172902.6
(22) Date of filing: 11.07.2008
(51) Int. Cl.: G06Q 10/00

(54) **Method and apparatus for providing notification of calendar event messages**

(62) Divisional of application: 08160256.7
(71) Applicant: RESEARCH IN MOTION LIMITED, Waterloo, Ontario N2L 3W8 (CA)
(72) Inventor: Jain, Rohit, Rocky, Waterloo, Ontario N2T 2T8 (CA); Hardy, Michael, Thomas, Waterloo, Ontario N2T 2J8 (CA)
(74) Representative: MERH-IP Matias Erny Reichl Hoffmann

(57) **Abstract**

An electronic device and a method implemented within the electronic device for controlling notification of calendar event messages by receiving a message having an attachment; examining the message to identify the attachment; and in the event that the attachment relates to a calendar event then activiating the notification.

## Description

The present specification relates generally to electronic devices incorporating calendar applications and in particular to a method and apparatus for controlling notification at an electronic device of calendar event messages such as incoming meeting invitations, responses, cancellations and modifications.

The use of electronic calendar applications in electronic devices is widespread, with most computers and hand held electronic devices having at least one such application installed to assist a user of the computer or handheld electronic device in planning their schedule. Many calendar applications are integrated with an e-mail system, allowing the user to receive requests for meetings in the form of calendar event messages. If the meeting request is for a timeslot in which there is already a meeting scheduled, the electronic calendar application will normally provide an indication of such, giving the user an opportunity to respond negatively to the meeting request, or rearrange the calendar to accommodate the meeting request.

Audible notifications such as ring tones, and tactile notifications (e.g. device vibrators) are also well known for notifying a user of events such as incoming calls, incoming messages (e.g. email or SMS), appointments and tasks. However, a user who receives many audio/tactile notifications may be unable to distinguish a calendar event message relating to a meeting invitation/cancellation/modification from routine messages. Calendar events are time sensitive in nature. A user who is unable to distinguish notification of a calendar event message from other types of notifications may be unaware of a meeting invitation/cancellation/modification until it is too late (e.g. the user has missed the meeting, or shown up for a meeting that has been cancelled).

Consequently, it is desirable to provide a mechanism for a user to be notified of calendar event messages in a distinctive manner from all other event notifications on his/her electronic device so that the user can react to such messages in a timely manner.

### GENERAL

In general, a method and apparatus are set forth which may control notification at an electronic device of calendar event messages.

According to one aspect, there may be provided a method of controlling notification of calendar event messages, comprising: receiving a message having an attachment; examining said message to identify said attachment; and in the event that said attachment relates to a calendar event then activiating said notification.

According to another aspect, there may be provided a computer readable medium containing computer-executable instructions that, when performed by a processor, cause said processor to implement a method of controlling notification of calendar event messages, comprising: receiving a message having an attachment; examining said message to identify said attachment; and in the event that said attachment relates to a calendar event then activiating said notification.

According to yet another aspect, there may be provided an electronic device having a processor and memory for executing a profile system for assigning notifications to events, and a client email application for receiving a message having an attachment, examining at least one header field of said message to identify said attachment; and in the event said header field indicates said attachment relates to a calendar event then activiating said profile system to generate a notification thereof.

### BRIEF DESCRIPTION OF THE DRAWINGS

The embodiments will be better understood with reference to the following Figures in which like numerals denote like parts and in which:

Figure 1 is a simplified block diagram of a system and apparatus generating a notification at an electronic device, according to a non-limiting embodiment;

Figure 2A is a schematic of a format for a calendar event message;

Figure 2B is a schematic of a data structure for the calendar event message of Figure 2A, according to a non-limiting embodiment;

Figure 3 is a block diagram of a communication system with which the electronic device of Figure 1 communicates;

Figure 4 is a block diagram of a profile system forming part of the electronic device of Figures 1 and 3, according to an exemplary embodiment;

Figure 5 is a schematic representation of the electronic device with a graphical user interface for programming profile settings for different services, according to an exemplary embodiment;

Figure 6 is a flowchart showing a method for configuring unique profile settings for multiple services according to an exemplary embodiment; and

Figure 7 is a flowchart showing a method for generating a notification at an electronic device of a calendar event message according to a preferred embodiment.

### DESCRIPTION OF PREFERRED EMBODIMENTS

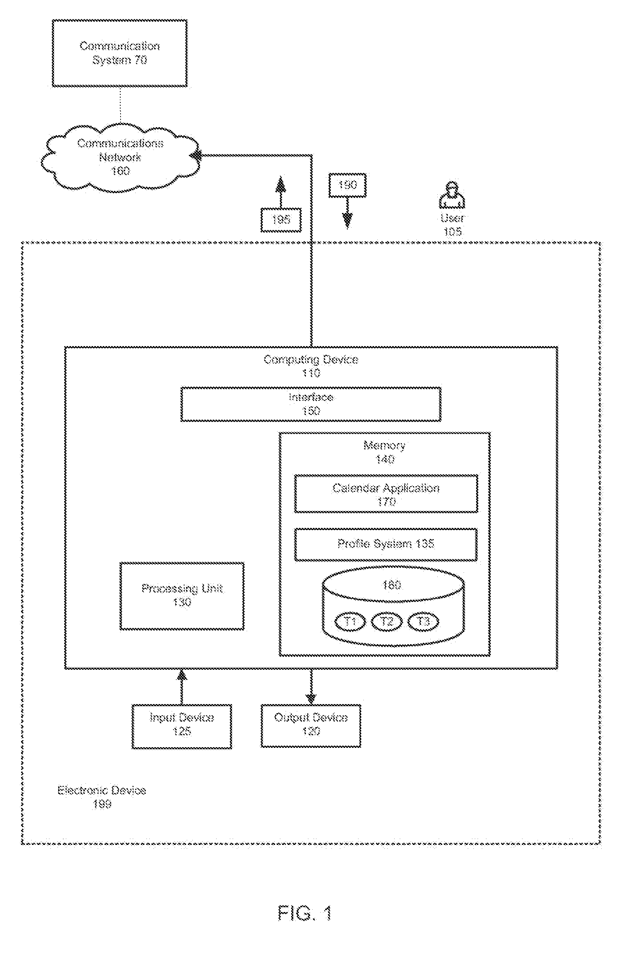

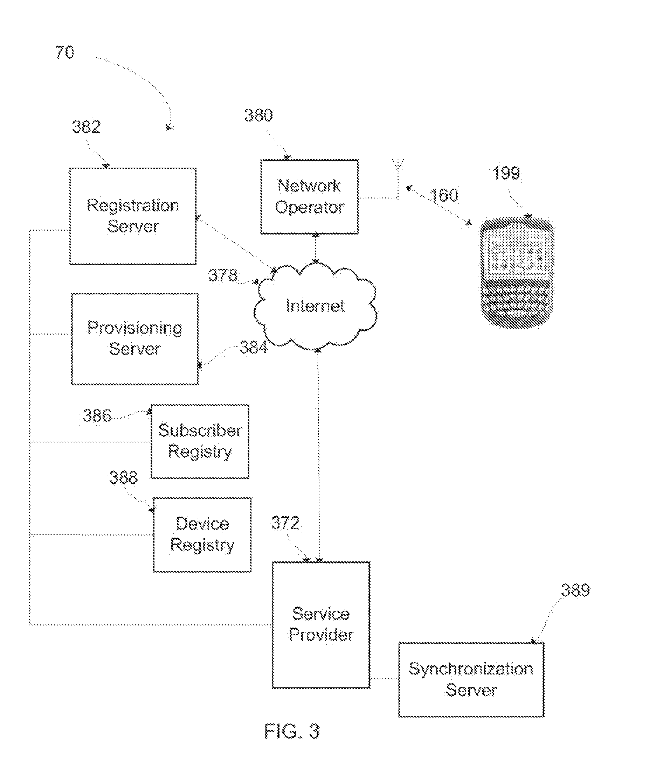

Figure 1 depicts a communication system 70 communicating over a communications network 160 with and electronic device 199 having an output device 120 for generating a notification, according to a non-limiting embodiment. Additional details of an exemplary embodiment of communication system 70 are set forth in greater detail below with reference to Figure 3.

A computing device 110 associated with a user 105, is in communication with the output device 120 and an input device 125, the computing device 110 comprising a processing unit 130 for processing data, the processing unit 130 coupled to a memory 140 and an interface 150 for enabling the computing device 110 to communicate with the communications network 160. The memory 140 stores data for processing by the processing unit 130, wherein the data includes software such as a profile system 135, calendar application 170 and a calendar database 180 for storing data associated with the calendar application 170. The user 105 may cause the processing unit 130 to execute the calendar application 170 by interfacing with the computing device 110 via the input device 125, and viewing a graphical user interface associated with the calendar application 170 on the output device 120. The user 105 may schedule meetings via the calendar application 170. A request for a meeting in the form of a calendar event message 190 may be received by interface 150 from communication system 70 via the communications network 160. The calendar event message 190 may be processed by the processing unit 130 and the user 105 may be given the opportunity to respond to the request via a dialog box displayed on the output device 120, for example to accept or reject the request or to propose another time or location for the meeting, as known to one of skill in the art. The response calendar event message 195 of the user 105 may then be transmitted to the computing device associated with another user via the communications network 160. Further functionality of the system depicted in Figure 1 will be described below.

The output device 120 comprises any output device for communicating information to the user 105. The output device 120 may comprise a visual display device (e.g. LCD display, cathode ray tube (CRT), a flat panel display, and the like), an audio display device, a vibration device, a combination thereof or another type of output device. The input device 125 comprises any device for receiving information from the user 105. The input device 125 may comprise a manual interface device, such as a trackball, keyboard, a voice interface device, or a combination thereof. Other types of input devices may occur to one of skill in the art. Embodiments are not to be considered particularly limited by the output device 120 or the input device 125, however.

In some embodiments, the electronic device 199 may comprise a handheld electronic device operable to communicate with the communications network 160 via the interface 150. In these embodiments, the electronic device 199 may comprise a cell phone, a personal digital assistant (PDA), a WiFi-based communications device, a WiMax based communications device, or a combination thereof. In other embodiments, the electronic device 199 may comprise another type of handheld electronic device. In some embodiments, the handheld electronic device may be enabled to communicate via a wireless network, while in other embodiments; the handheld electronic device may be enabled to communicate via a wired network. In yet other embodiments, the handheld electronic device may be enabled to communicate via either a wireless or a wired network. In some embodiments the handheld electronic device is enabled to communicate with the communications network 160, via another computing device local to the handheld electronic device, which is in communication with the communications network 160. In these embodiments, the handheld electronic device may be enabled to communicate with the computing device local to the handheld device via a wired or a wireless link (e.g. WiFi, Bluetooth, and/or a hardwired serial bypass, such as a USB link).

In other embodiments, the computing device 110 is not incorporated into a handheld electronic device. In these embodiments, the electronic device 199 may comprise a laptop computer. In these embodiments the computing device 110 may be operable to communicate via a wired network, a wireless network, or a combination thereof.

In some embodiments the communications network 160 may comprise at least one of a local area network (LAN), a wide area network (WAN), a wireless network, a packet-based communications network, such as the internet, and or the PSTN, a cell network, a WiFi network, a WiMax network, or a combination thereof.

The interface 150 enables the computing device 110 to communicate with via communication network 160, including receiving the request 190 for a meeting and transmitting the response 195. In embodiments where the communications network 160 comprises a wireless network, the interface 150 comprises a wireless communications interface, as known to one of skill in the art. Non-limiting examples of a wireless communications interface include, but are not limited to, a cell phone interface (e.g. CDMA, GSM, 1x, EVDO, UTMS, and the like), a WiFi interface, a WiMax interface, and the like. In embodiments where the communications network 160 comprises a wired communications network, the interface 150 comprises a wired communications interface, as known to one of skill in the art. In these embodiments, the interface 150 is enabled to connect to an edge device (not depicted) of the communications network 160, for example a modem. In some of these embodiments, the interface 150 may be enabled to connect to the edge device via another computing device, which is in communication with the communications network 160, as described above. In yet other embodiments the interface 150 may be enabled for communications via either a wired or a wireless communications network.

Embodiments are not to be considered particularly limiting by the computing device 110, whether integrated into the electronic device 199 or not, the interface 150 or the communications network 160, however, and other computing devices, interfaces and communications networks may occur to one of skill in the art.

The calendar application 170 may comprise any calendar application which allows the user 105 to organize his/her schedule. When the user 105 initiates the calendar application 170, the computing device 110 causes the calendar application 170 to be loaded into the processing unit 130 for processing. The calendar application 170 may comprise an executable file and further data files stored in the memory 140. The calendar application 170 is enabled to retrieve data from the calendar database 180 for presentation to the user 105 on the output device 120. In some embodiments, the calendar application may be further enabled to allow the user 105 receive and respond to e-mail. In other embodiments, the calendar application 170 may be enabled to interface with another software application (not depicted) stored in the memory 140 for allowing the user 105 to receive and respond to e-mail. In any event, the calendar application 170 is enabled to receive the request 190 for a meeting and assist the user 105 in determining the response 195 to the request 190. In some non-limiting embodiments the calendar application 170 may be further enabled to assist the user in organizing tasks, making notes, organizing contacts and the like. In some non-limiting embodiments the calendar application comprises Microsoft Outlook™ from Microsoft Corporation, One Microsoft Way, Redmond, WA 98052-7329, USA. In other non-limiting embodiments, the calendar application 170 comprises Lotus Notes™, Groupwise Calendar™, Google Calendar™, Hotmail Calendar™, and the like.

The calendar database 180 stores data associated with the calendar application 170, the data comprising a schedule of the user 105. In some embodiments, each meeting in the schedule of the user 105 is associated with a record of data associated with the meeting, each record stored at the calendar database 180. In a non-limiting example, the record of data associated with each meeting may comprise a Table, as follows:

| | |
|---|---|
| Date | May 25, 2007 |
| Start Time | 9 am |
| End Time | 12 pm |
| Location | Bob's Office, 1300 Yonge Street, Toronto |
| Subject | Discuss Software Project |

The non-limiting example above depicts a record of data associated with a meeting that occurs between 9am and 12pm, on May 25, 2007, wherein the Table comprises a date for the meeting, a start time for the meeting, and end time for the meeting, the location of the meeting and the subject of the meeting. In other embodiments, the Table may comprise other data associated with the meeting.

The calendar application 170 is enabled to retrieve the data and process the data for display to the user 105 on the output device 120 such that the user 105 may view their schedule for a particular period of time, for example by the day, week, month and the like.

As described in greater detail below, the computing device 110 is preferably enabled to generate a notification via the profile system 135, for example at the output device 120, upon receipt of a calendar event message, such as the message 190.

In one embodiment, the meeting request 190 is organized according to a particular calendar data structure that uses text strings and values to represent electronic calendar data. For example, RFC 2445 (iCalendar), also referred to as ICAL, provides such a structure and standard method for defining calendar-related data messages. When combined with RFC 2446 (iTIP), which defines a transport-independent means for exchanging ICAL objects, a mechanism is provided to allow calendar systems on multiple platforms to inter-operate. According to the preferred embodiment, a compressed data structure (referred to herein as "CICAL") is provided that is based on the standard ICAL data structure but uses numerical tags to represent the text strings. Because these numerical tags are much shorter in length than the conventional text strings in ICAL, the calendar event message can be effectively compressed, which is particularly useful when transferring calendar event messages over wireless data networks.

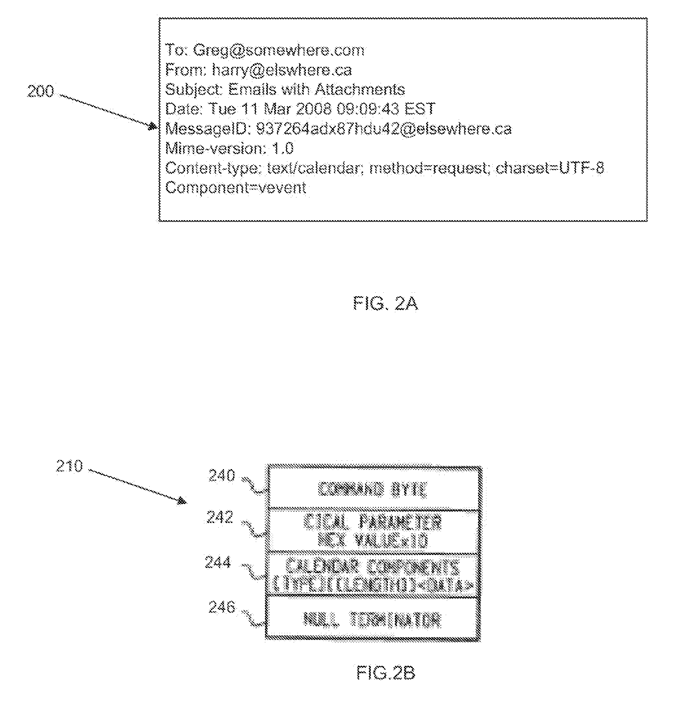

Referring now to Figure 2A, an example is shown of an email message containing a meeting notification attachment encoded using the well known MIME format. The email message contains several header fields 300, including 'To:', 'From:', 'Subject:', and 'Date:'. Each message is also assigned a unique message ID (MessageID). MIME encoding is indicated by the presence of a "Content-Type:" field. The value of this field includes a value of "text/calendar", for identifying the message as relating to a calendar event, and also includes the type parameter "method" used to convey the calendar object method or transaction semantics for calendaring and scheduling. A "charset" parameter is included if the calendar object contains characters that are not part of the US-ASCII character set. The "component" parameter(s) defines the type(s) of calendar component(s) within the calendar object (e.g. "VEVENT" refers to the event calendar component, "VTODO" refers to the to-do calendar component, etc.)

The preferred format of the calendar attachment payload 210 includes the following segments (as shown in Figure 2B): command byte 240; version number 242; calendar components 244; and NULL terminator 246. The specific formats of each part of the CICAL structure are as follows:

Command byte 240 indicates which of a plurality of calendar commands the message relates to. These command bytes include at least the following types of calendar commands: (1) meeting request from device; (2) meeting request from server; (3) meeting response from device; (4) meeting response from server; (5) meeting cancel from device; and (6) meeting cancel from server.

The version number 242 is preferably a single byte. The version number for all CICAL messages conforming to this specification is the hex value 0x10. Note, however, that another version number could be utilized.

The calendar components segment 244 has the following format: component properties; and (NULL Terminator after last property). Component properties are type-length encoded. Each component property has the following general format: [type][[length]]<data>, where [type] is a single byte with one of the values listed below, [[length]] is a length structure comprising a variable number of bytes, and <data> represents the contents of the property and is exactly the number of bytes specified by the [[length]] structure. The length structure contains the length of the data that follows. The structure contains a variable number of bytes. The most significant bit of each byte is used as a structural indicator, if the most significant bit is set then the following byte is also part of the length structure. If the most significant bit is clear then the current byte is the last byte of the length structure. In particular a k-byte length structure appears as a sequence of (k-1) bytes each with the most significant bit (MSB) set followed by a single byte with the MSB cleared. The value of the length structure is obtained from the least significant 7 bits of each byte concatenated in big-endian format, for example [0x85][0x99][0x23] is equivalent to the binary value 000 0101 001 1001 010 0011 or in decimal notation 85155.

The list of preferred defined type bytes is as follows:
RESERVED=0x00;
CICAL_COMPONENT=0x01;
CICAL_UID=0x02;
CICAL_EQUENCE=0x03;
CICAL_CALENDAR ID=0x04;
CICAL_RELATED TO=0x05;
CICAL_ORGANIZER=0x06;
CICAL_ACCEPTED=0x07;
CICAL_DECLINED=0x08;
CICAL_TENTATIVE=0x09;
<CICAL_NEEDSACTION=0x0A;
CICAL_DSTART=0x0B;
CICAL_DTEND=0x0C;
CICAL_SUMMARY=0x0D;
CICAL_LOCATION=0x0E;
CICAL_TRIGGER=0x0F;
RRULE_FREQUENCY=0x10;
RRULE_DAYOFWEEK=0x11;
RRULE_MONTH=0x12;
RRULE_DAYOFMONTH=0x13;
RRULE_COUNT=0x14;
RRULE_INTERVAL=0x15;
RRULE_BYSETPOSITION=0x16;
CICAL_EXDATE=0x17;
CICAL_DESCRIPTION=0x18;
CICAL_RECURRENCEID=0x19;
CICAL_XREVISION=0x1A;
UNDEFINED=0xFF.

Figure 3 sets forth additional aspects of the communication system 70 of Figure 1, for provisioning a plurality of services to the electronic device 199. Thus, for example, an e-mail account may be provided by a service provider 372, which communicates over Internet 378, in a well-known manner. Electronic device 199 also communicates over Internet 378 via the communications network 160 provided by a network operator 380.

The system 70 includes a registration server 382, a provisioning server 384, a subscriber registry 386 and a device registry 388. The system 70 may also include a synchronization server 389 for performing data synchronization with the electronic device.

It is conventional for the service provider 372 to store an IP address of the registration server 382 within electronic device 199, at the time the device is delivered to the user. Upon initially activating the electronic device 199, the device detects the presence of the communications network 160 (e.g. a wireless network) controlled by network operator 380 and uses the stored address of the registration server 382 to send a registration request to the registration server. The registration request includes an identification code for the device 199, the identity of the user 150, and the identity of the network operator 380.

Upon receipt of the registration request, server 382 attempts to authenticate the request and, if successful, extracts the information in the request message and transmits it to the provisioning server 384. Provisioning server 384 determines whether the user is permitted to provision the associated service by checking the status of the user in subscriber registry 386. Similarly, provisioning server 384 checks the status of the device in device registry 388. If provisioning server 384 is unable to approve the registration request based on the status of the user or the device as maintained in the subscriber registry 386 and/or the device registry 388 then provisioning server 384 typically either disallows or delays the registration request while the subscriber's status is checked in real-time with the network operator 380.

If the provisioning server 384 is able to approve the registration request then, the provisioning server 384 transmits (or "pushes") a service book (or multiple service books) to the device 199 that contains data and instructions to enable the device 199 to provision the associated service provided by service provider 372. The service book is configured to become active upon receipt at the device 199 to permit the user to enter a desired user ID and a desired password for the associated service.

The device 199 then transmits the user ID and password specified by the user for the associated service to provisioning server 384. Communication between the electronic device and the provisioning server 384 may be protected using encryption or other techniques, such as transport layer security (TLS). The provisioning server 384 determines if an account for the associated service may be created using the user ID and password specified by the user. If the account may be created, then provisioning server 384 creates the associated service account for device 199 in the associated server provider system 72 and downloads a corresponding service book to the electronic device 199. The corresponding service book contains service records such as a Compressed Multipurpose Internet Mail Extensions (CMIME) service record, for example, or the CICAL service book discussed in detail above.

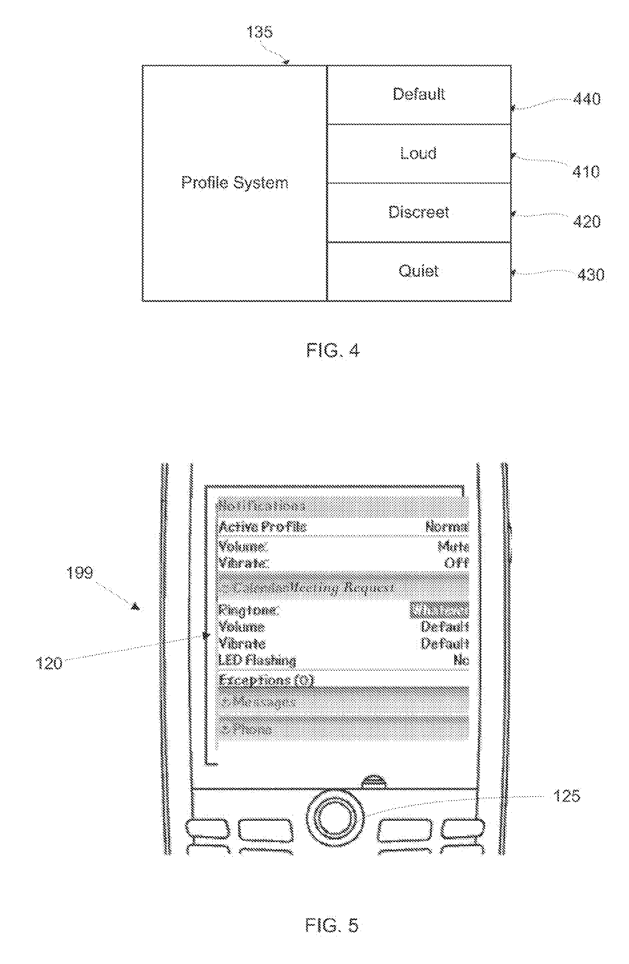

According to an exemplary embodiment, as shown in Figure 4, a profile system 135 is provided as one of the applications executable by processing unit 130 from memory 140. The profile system 135 has multiple programmable profile settings (e.g. Loud 410, Discreet 420, Quiet 430, and, although not shown, optionally also vibrate, LED flash, etc.), and a default profile setting 440 that is initially assigned to each application (e.g. calendar, messaging, tasks, alarm, etc.). Profile settings are programmed via user input device 125 of the device 199, as illustrated in Figure 5, to associate custom audible and/or tactile notifications for calendar events and, in particular, for the receipt of calendar event messages relating to meeting invitations/cancellation/modifications, etc.

Thus, a notifications application may be launched resulting in display of a graphical window on output device 120 from which the user may select among a plurality of device applications (e.g. Calendar, Messages, Phone, etc.) within memory 140 and executable by processor 130, with which event notifications may be customized. Thus, as shown in Figure 5, a custom notification may be assigned to calendar event messages (denoted in Figure 5 as Calendar Meeting Request) pertaining to meeting invitations/cancellations/modifications, etc., via operation of user input device 125, such as a track ball. As discussed above, custom notification is preferably associated with calendar event messages because such messages typically are of greater time sensitivity than other types of messages (e.g. e-mail, SMS, etc.)

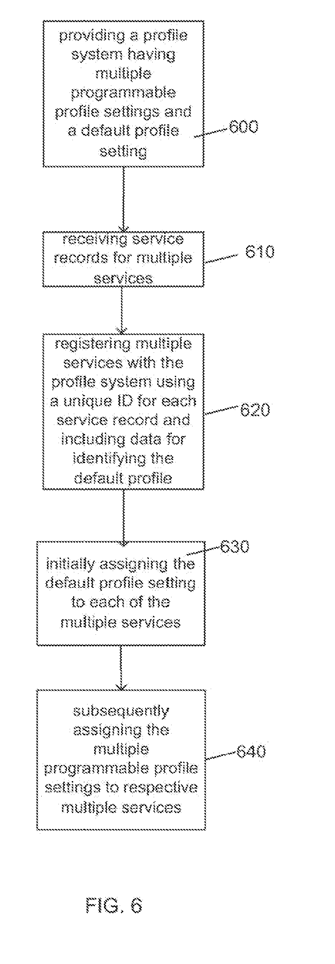

Turning to Figure 6, a flowchart is provided showing a method for configuring unique profile settings for multiple services according to an exemplary embodiment. In step 600, profile system 135 is provided having multiple programmable profile settings and a default profile setting for the application (e.g. messaging). In step 610, service records are received for the multiple services from provisioning server 384. In step 620, the multiple services register with the profile system 135 using a unique ID for each service record and including data for identifying the default profile setting for the application. In step 630, the default profile setting is initially assigned to each of the multiple services. Then, at step 640, the multiple programmable profile settings are subsequently assigned to respective ones of the multiple services. Thus, at step 640, a unique notification profile setting (e.g. vibrate + loud custom ring tone) may be assigned to incoming calendar event messages.

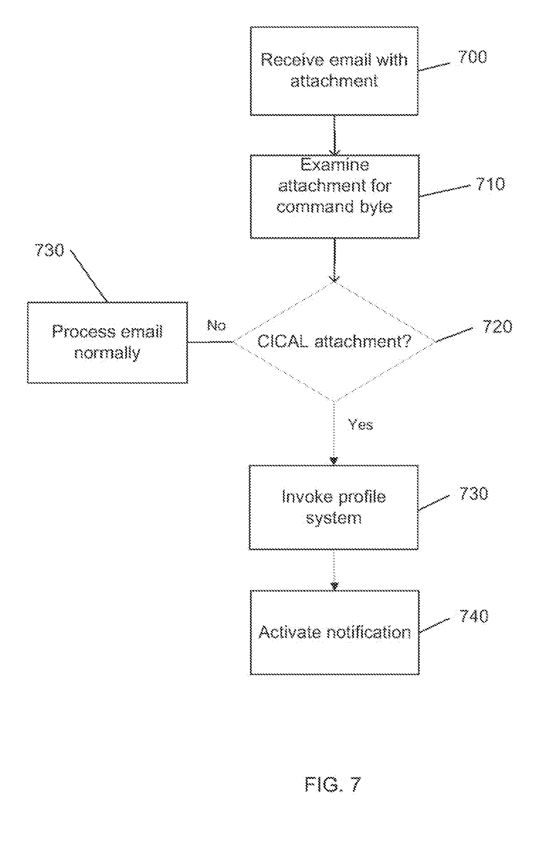

Turning to Figure 7, a flowchart is provided showing a method of generating a notification at electronic device 199 of incoming calendar event messages, such as meeting invitations, responses (acknowledgement, decline, etc.) and cancellations. In step 700, an email message containing an attachment is received at the device 199. A conversion method application of the device 199 then iterates through the hexadecimal tags comprising the email payload in order to identify the command byte 240 (step 710), to determine whether the attachment payload is a CICAL attachment (step 720). If not, (i.e. a ""No" at step 720), then the email is normally processed, as is known in the art. However, if the CICAL command byte 240 is identified (i.e. a ""Yes" at step 720), then the profile system 135 is invoked, causing the custom notification assigned according to the method of Figure 6 (e.g. ring tone and/or vibration) to be activated (step 740), thereby alerting user 150 to a time-sensitive calendar event requiring the user's attention.

Upon user opening of the message resulting from the alerting provided by the custom notification, the email client application furnishes a calendar client application of the device 199 with the CICAL data from the attachment such that when the calendar application is launched (e.g. by appropriate user manipulation of input device 125), the calendar application will display the received meeting data. The device 199 may then, for example, prompt user 150 to accept or decline if the calendar event is a meeting request. If the user accepts the meeting request, then device 199 stores the meeting in calendar database 180. If the user declines the meeting request, the device discards the meeting request.

A person of ordinary skill in the art will understand that a custom notification may be generated for any form of calendar event message, including an invitation to a meeting, a response to a meeting (e.g. accepts, decline, etc.), as well as meeting cancellations or modifications. Additional criteria may be added to the profile setting methodology such as, for example, limiting custom notifications to same-day meeting messages which are normally of greater importance than messages relating to meetings in future days. Such criteria can be implemented by examining additional fields of the message attachment, such as the date and time fields, etc.

Specific embodiments have been shown and described herein. However, modifications and variations may occur to those skilled in the art. For example, as discussed above, although the exemplary embodiment has been described in terms of implementation on a portable handheld electronic device, the principles set forth herein may be applied to other devices such as desktop computers, etc. All such modifications and variations are believed to be within the sphere and scope of the present embodiment.

Particular aspects of the present document are:
1. A method of controlling notification of calendar event messages, comprising:
   receiving (700) a message (190) having an attachment (210);
   examining (710) said message to identify said attachment; and
   in the event that said attachment relates to a calendar event then activiating said notification.
2. A method according to aspect 1, wherein said examining further includes iterating through hexadecimal tags of said message in order to identify a command byte (240) thereof.
3. A method according to aspect 2, wherein said command byte identifies said message as one of a meeting request, meeting response, or meeting cancellation.
4. A method according to any preceding aspect, wherein said attachment is a CICAL attachment.
5. A method according to any preceding aspect, wherein said notification is activated via a profile system (135).
6. A method according to any preceding aspect, wherein.said calendar event is a meeting invitation.
7. A method according to any one of aspects 1 to 5, wherein.said calendar event is a meeting response.
8. A method according to aspect 7, wherein.said meeting response is one of either accept or decline.
9. A method according to any one of aspects 1 to 5, wherein.said calendar event is a meeting cancellation.
10. A method according to any one of aspects 1 to 5, wherein.said calendar event is a meeting modification.
11. A method according to any preceding aspect, wherein.said notification is tactile.
12. A method according to any one of aspects 1 to 10, wherein.said notification is audio.
13. A computer readable medium containing computer-executable instructions that, when performed by a processor (130), cause said processor to implement the method of any one of aspects 1 to 12.
14. An electronic device (199) comprising a processor (13) and memory (140) for executing a profile system (135) for assigning notifications to events, and a client application to perform the steps of the method of any one of aspects 1 to 12.

## Claims

1. A method of controlling notification of calendar event messages, comprising:
examining (710) a message (190) having an attachment (210) to identify the attachment, wherein the examining includes identifying a command byte (240);
examining at least one field of the message attachment; and
in the event that the command byte is identified indicating that the attachment relates to a calendar event then activating a notification of the calendar event in accordance with additional notification criteria implemented by examining the at least one field of the message attachment.

2. A method as claimed in claim 1, wherein the command byte identifies the message as one of a meeting request, meeting response, or meeting cancellation.

3. A method as claimed in any preceding claim, wherein the attachment is a CICAL attachment.

4. A method as claimed in any preceding claim, wherein the notification is activated via a profile system (135).

5. A method as claimed in any preceding claim, wherein the calendar event is a meeting invitation.

6. A method as claimed in any one of claims 1 to 4, wherein the calendar event is a meeting response.

7. A method as claimed in claim 6, wherein the meeting response is one of either accept or decline.

8. A method as claimed in any one of claims 1 to 4, wherein the calendar event is a meeting cancellation.

9. A method as claimed in any one of claims 1 to 4, wherein the calendar event is a meeting modification.

10. A method as claimed in any preceding claim, wherein the additional notification criteria includes date and time of the calendar event.

11. A method as claimed in any preceding claim, wherein the examining further includes iterating through hexadecimal tags of the message attachment in order to identify the command byte (240).

12. A method as claimed in any preceding claim, wherein the notification is at least one of an audio notification and a tactile notification.

13. A computer readable medium containing computer-executable instructions that, when performed by a processor (130), cause the processor to implement the method of any one of claims 1 to 12.

14. An electronic device (199) comprising a processor (13) and memory (140) for executing a profile system (135) for assigning notifications to events, and a client application to perform the steps of the method of any one of claims 1 to 12.
